# EUROPÄISCHE PATENTSCHRIFT

(11) **EP 2 060 902 B1**
(45) Veröffentlichungstag und Bekanntmachung des Hinweises auf die Patenterteilung: **13.08.2014**
(21) Anmeldenummer: 08075792.5
(22) Anmeldetag: 29.09.2008
(51) Int. Cl.: G01N 17/00

(54) **Verfahren zur beschleugnigten Durchführung von Korosionstests an Stahlwerkstoffen**
Method of accelerating the implementation of corrosion tests on steel materials
Procédé destiné à l'exécution accélérée de tests de corrosion sur des matériaux en acier

(30) Priorität: 07.11.2007 DE 102007053735
(43) Veröffentlichungstag der Anmeldung: 20.05.2009
(73) Patentinhaber: Salzgitter Mannesmann Grobblech GmbH, 45473 Mühlheim (DE)
(72) Erfinder: Meimeth, Stefan, 42657 Solingen (DE); Siegel, Hans, 47053 Duisburg (DE); Bosch, Christoph, 44357 Dortmund (DE)
(74) Vertreter: Meissner, Peter E.

(56) Entgegenhaltungen:
- WO-A-2006/030226
- US-A- 3 427 873
- US-A- 4 282 181
- BOALCH R D ET AL: "Corrosion studies of iron III: the study of a mild steel corrosion inhibitor using differential capacitance measurement" SURFACE TECHNOLOGY, ELSEVIER SEQUOIA, LAUSANNE, CH, Bd. 26, Nr. 1, 1. September 1985 (1985-09-01), Seiten 87-92, XP024640233 ISSN: 0376-4583 [gefunden am 1985-09-01]

## Beschreibung

Die Erfindung betrifft ein Verfahren zur beschleunigten Durchführung von Korrosionstests an Stahlwerkstoffen gemäß dem Oberbegriff des Patentanspruches 1.

Insbesondere bezieht sich die Erfindung auf einen Korrosionstest zur Prüfung auf Wasserstoff-induzierte Rissbildung (HIC), wie er aus dem NACE Standard TM 0284-2003 bekannt ist.

Die Wasserstoff-induzierte Rissbildung an Stahlwerkstoffen stellt ein ernstes Problem, insbesondere für Rohrleitungen dar, die für den Transport von Schwefelwasserstoff enthaltenes Öl oder Gas ausgelegt werden sollen.

Bei diesem in der Fachwelt allgemein anerkannten Testverfahren wird die Prüfung auf Wasserstoff-induzierte Rissbildung nach der Spezifikation des NACE Standards mit einer Prüflösung, bestehend aus einer mit H₂S gesättigten Lösung aus NaCl und CH₃COOH durchgeführt.

Die Prüfanforderungen für den in die Prüflösung eingetauchten Prüfling sehen vor, dass ein bestimmtes Risslängenverhältnis nach 96 Stunden Prüfdauer nicht überschritten werden darf.

Allgemein werden diese von den Kunden geforderten Freigabeprüfungen von den Stahllieferanten produktionsbegleitend durchgeführt.

Ein gravierender Nachteil dieses Korrosionstests besteht darin, dass der Zeitraum zwischen Einlagerung der Proben und dem Prüfergebnis mit 96 Stunden sehr lang ist, was zu erheblichen Produktionsverzögerungen führt und damit hohe Kosten verursacht.

Auch eine möglichst zeitnahe und termingerechte Belieferung des Kunden wird durch die sehr lange Prüfzeit erschwert.

Im Rahmen von internen Untersuchungen die Prüfzeit zu verkürzen, wurden Korrosionstests unter verschärften Testbedingungen durchgeführt. Untersucht wurde der Einfluss einer Erhöhung des H₂S-Druckes und eine Erniedrigung der Prüftemperatur. Beide Möglichkeiten weisen den Nachteil auf, das sie nur mit großem technischen Aufwand umsetzbar sind.

Aufgabe der Erfindung ist es, ein Verfahren zur Durchführung von Korrosionstests an Stahlwerkstoffen, insbesondere zur Prüfung auf Wasserstoff-induzierte Rissbildung, anzugeben, das bei einer deutlich verkürzten Prüfdauer ein vergleichbares Prüfergebnis wie der NACE Standardtest aufweist und mit geringem Aufwand durchgeführt werden kann.

Erfindungsgemäß wird diese Aufgabe dadurch gelöst, dass anstelle der nach dem NACE Standard TM 0284-2003 vorgesehenen Prüflösung eine H₂S gesättigte Pufferlösung als Prüflösung verwendet wird, die den pH-Wert zwischen 2,0 und 3,0 konstant hält und der Prüfzyklus nach 24 h beendet wird.

Der große Vorteil des erfindungsgemäßen Verfahrens ist darin zu sehen, dass ein mit dem NACE Standardtest vergleichbares Prüfergebnis nunmehr in einer deutlich verkürzten Prüfzeit von nur noch 24 h reproduzierbar erreicht werden kann und die Prüfung mit vergleichbaren Kosten wie beim NACE Standardtest durchgeführt werden kann.

Der Testaufbau und die Ausführung entsprechen dem NACE Standardtest, so dass die Vergleichbarkeit gewährleistet ist.

Die erfindungsgemäße Pufferlösung weist dabei die vorteilhafte Eigenschaft auf, dass die ansonsten beim NACE Standardtest entstehende pH-Drift während der Prüfzeit auf ein Minimum reduziert wird und somit weitgehend gleichmäßige Testbedingungen vorherrschen.

In einer weiteren Ausgestaltung der Verbindung wird der Anfangs-pH-Wert der Pufferlösung mit NaOH eingestellt, wobei der Pufferlösung ebenfalls NaCl zur Einstellung des Salzgehaltes zugesetzt ist.

Die nachfolgende Tabelle zeigt die Ergebnisse von Korrosionstests mit verschiedenen Pufferlösungen im Vergleich zur Prüflösung des NACE Standardtests.

| **Erfindung** | **Prüflösung** | **pH-Bereich** | **Testdauer** | **HIC-Ergebnis*** |
|---|---|---|---|---|
| Innerhalb | Tricarbonsäure-Puffer | 2,0 - 3,0 | 24 h | **1,00 - 1,02** |
| Vergleich | NACE TM0284, Lösung A | | 96 h | **1,00** |
| Außerhalb | Acetat-Puffer | 2,5 - 3,5 | 24 h | **0,82 - 0,85** |
| | Glycin-Puffer | 2,5 - 3,5 | 48 h | **0,85 - 0,91** |

| | | | | |
|---|---|---|---|---|
| * bezogen auf NACE TM0284, Lösung A, 96 Stunden | | | | |

Im Ergebnis weisen nur Tests mit Tricarbonsäure-Pufferlösung ein Prüfergebnis auf, welche nach nur 24 h Prüfdauer gleiche Werkstoffschädigungen aufweisen wie das des 96 h dauernden NACE Standardtests.

Somit kann die Prüfdauer des Tests auf Wasserstoff-induzierte Rissbildung (HIC) vorteilhaft von 96 h auf 24 h bei gleichem Prüfergebnis reduziert werden.

## Patentansprüche

1. Verfahren zur beschleunigten Durchführung von Korrosionstests an Stahlwerkstoffen, insbesondere zur Prüfung auf Wasserstoff-induzierte Rissbildung nach dem NACE Standard TM 0284-2003, wobei ein Prüfling in eine mit H₂S gesättigte Prüflösung eingetaucht und nach Beendigung der Prüfzeit das Risslängen- oder Rissflächenverhältnis ausgewertet wird,
**dadurch gekennzeichnet,**
**dass** anstelle der nach dem NACE Standard TM 0284-2003 vorgesehenen Prüflösung eine H₂S gesättigte Pufferlösung zur Konstanthaltung des pH-Wertes zwischen 2,0 und 3,0 auf Basis Tricarbonsäure verwendet und der Prüfzyklus nach 24 h beendet wird.

2. Verfahren nach Anspruch 1,
**dadurch gekennzeichnet,**
**dass** der Anfangs-pH-Wert der Pufferlösung mit NaOH eingestellt wird.

3. Verfahren nach den Ansprüchen 1 - 2,
**dadurch gekennzeichnet,**
**dass** die Pufferlösung NaCl enthält.

## Claims

1. Method for the accelerated implementation of corrosion tests on steel materials, in particular for testing for hydrogen-induced crack formation according to the NACE Standard TM 0284-2003, wherein a test piece is immersed in a test solution saturated with H₂S and after the end of the test period the crack-length or crack-area ratio is evaluated,
**characterised**
**in that**, instead of the test solution provided according to the NACE Standard TM 0284-2003, a H₂S saturated buffer solution is used to stabilise the pH-value between 2.0 and 3.0 on the basis of tricarboxylic acid and the test cycle is concluded after 24 h.

2. Method according to Claim 1,
**characterised**
**in that** the initial pH-value of the buffer solution is set with NaOH.

3. Method according to Claims 1-2,
**characterised**
**in that** the buffer solution contains NaCl.

## Revendications

1. Procédé pour l'exécution accélérée de tests de corrosion sur des matériaux en acier, en particulier pour contrôler la formation de fissures induites par l'hydrogène selon la norme NACE TM 0284-2003, dans lequel un échantillon est immergé dans une solution test saturée en H₂S et à l'issue de la période de test le rapport de longueur ou de surface des fissures est évalué,
**caractérisé**
**en ce qu'**au lieu de la solution prévue selon la norme NACE TM 0284-2003 une solution tampon saturée en H₂S est utilisée pour maintenir la valeur du pH constante entre 2,0 et 3,0 sur la base de l'acide tricarboxylique et le cycle de test est terminé au bout de 24 heures.

2. Procédé selon la revendication 1,
**caractérisé**
**en ce que** la valeur initiale du pH de la solution tampon est ajustée avec du NaOH.

3. Procédé selon les revendications 1-2,
**caractérisé**
**en ce que** la solution tampon contient du N_{A}CI.
